(19) Europäisches Patentamt
European Patent Office
Office européen des brevets

(11) Veröffentlichungsnummer: **0 000 137**
**B1**

(12) # EUROPÄISCHE PATENTSCHRIFT

(45) Veröffentlichungstag der Patentschrift: **24.03.82**

(21) Anmeldenummer: **78100138.3**

(22) Anmeldetag: **12.06.78**

(51) Int. Cl.³: **C 08 G 65/32,**
B 01 F 17/00, D 06 P 1/613

(54) **Polyglykolester, Verfahren zu ihrer Herstellung und ihre Verwendung als oberflächenaktive Mittel.**

(30) Priorität: **25.06.77 DE 2728767**
**31.12.77 DE 2759204**

(43) Veröffentlichungstag der Anmeldung:
**10.01.79 Patentblatt 79/1**

(45) Bekanntmachung des Hinweises auf die Patenterteilung:
**24.03.82 Patentblatt 82/12**

(84) Benannte Vertragsstaaten:
**CH DE FR GB**

(56) Entgegenhaltungen:
CH - A - 490 489
DE - A - 1 595 369
DE - A - 1 619 053
DE - A - 2 102 899
FR - A - 2 156 022
US - A - 2 457 139

(73) Patentinhaber: **HOECHST AKTIENGESELLSCHAFT**
**Postfach 80 03 20**
**D-6230 Frankfurt/Main 80 (DE)**

(72) Erfinder: **Ong, Sienling, Dr.**
**Jahnstrasse 38**
**D-6238 Hofheim am Taunus (DE)**
Erfinder: **Cuntze, Ulrich, Dr.**
**Hundshager Weg 2**
**D-6238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 137 B1

Polyglykolester, Verfahren zu ihrer Herstellung und ihre Verwendung als oberflächenaktive Mittel

Gegenstand der Erfindung sind Polyglykolester der Formel I

$$(CH_3)_a - C \left[ CH_2 - (O-CHZ-CH_2)_n - \begin{matrix} (OH)_b \\ (O-CO-R)_{4-a-b} \end{matrix} \right]_{4-a} \qquad (I)$$

in welcher R ein offenkettiger aliphatischer Rest mit 9 bis 19, vorzugsweise 11 bis 17 C-Atomen ist, Z für Wasserstoff und Methyl steht, wobei das Verhältnis H : $CH_3$ 2 : 1 bis 4 : 1, vorzugsweise 2,5 : 1 bis 3,5 : 1 beträgt, a Null oder 1 ist, b 1 bis 1,5 ist und (4-a) n 150 bis 300, vorzugsweise 200 bis 250 ist.

Besonders bevorzugt sind Polyglykolester, in denen der Rest R—CO Oleyl ist, das Verhältnis von H : $CH_3$ im Rest Z 3 : 1 in statistischer Verteilung ist, a für Null steht, b 1,1 ist und (4-a) n etwa 210 ist.

Gegenstand der Erfindung ist weiterhin ein Verfahren zur Herstellung der genannten Polyglykolester, das dadurch gekennzeichnet ist, daß man eine Verbindung der Formel

$$(CH_3)_a — C(CH_2OH)_{4-a}$$

in der a Null oder 1 ist, mit der 150—300-fach, vorzugsweise 200—250fach, insbesondere etwa 210-fach molaren Menge eines Gemisches aus Äthylenoxid und Propylenoxid im Molverhältnis 2 : 1 bis 4 : 1 oxalkyliert und das Oxalkylat mit einem den Rest R—CO einführenden Acylierungsmittel partiell verestert. Als solche Acylierungsmittel kommen natürliche oder synthetische Fettsäuren wie beispielsweise Stearinsäure, Palmitinsäure, Ölsäure, Linolensäure, Talgfettsäure, Tallölfettsäure, Isostearinsäure, Kokosfettsäure oder Mischungen solcher Säuren sowie die entsprechenden Säurechloride in Betracht.

Gegenstand der Erfindung ist weiterhin die Verwendung der neuen Polyglykolester als oberflächenaktive Mittel.

Vor allem eignen sich die neuen Polyglykolester zur Erhöhung bzw. Stabilisierung der Viskosität wäßriger Systeme, insbesondere als Zusatz zu Druckpasten oder Klotzflotten. Hierzu werden die Polyglykolester in Mengen von etwa 0,1 bis etwa 10%, bezogen auf das Gewicht der fertigen Zubereitung, zugesetzt, also etwa 1 bis 100 g, vorzugsweise 2 bis 30 g Polyglykolester pro kg Druckpaste.

Wäßrige Zubereitungen der erfindungsgemäßen Polyglykolester können bereits ohne weitere Zusätze als Verdickungsmittel eingesetzt werden. Besonders vorteilhaft sind jedoch die neuen Polyglykolester als Zusätze zu anderen bekannten Verdickungsmitteln, wobei sie die Viskosität wäßriger Systeme nicht nur erhöhen, sondern vor allem auch stabilisieren können.

Es ist bekannt, daß insbesondere Druckpasten auf Basis synthetischer Verdickungsmittel oder Öl-in-Wasser-Emulsionen sowie Mischungen dieser Emulsionen mit nativen Verdickungsmitteln bei Zugabe von Elektrolyten ihre Viskosität ganz oder teilweise verlieren und damit unbrauchbar werden. Da die handelsüblichen Farbstoffe und Druckereihilfsmittel normalerweise elektrolythaltig sind, ist es in der Praxis nicht zu vermeiden, Elektrolyte in die Druckpasten einzubringen. Es ist deshalb im allgemeinen erforderlich, eine Reihe von Vorversuchen durchzuführen, in denen die Verträglichkeit der Druckpastenkomponenten festgestellt werden muß, bevor man zu einer brauchbaren und lagerfähigen Druckpaste kommt. Trotz dieser Vorsorgemaßnahmen ist es jedoch oft nicht zu vermeiden, daß die Druckpasten nach einiger Zeit ihre Viskosität verlieren, vor allem in der Wärme, d.h. insbesondere in wärmeren Ländern oder während des Sommers.

Einem Verdickungsmittel fallen bekanntlich eine ganze Reihe von Aufgaben zu: Es muß dem durch die Capillarkräfte des Gewebes bedingten Ausfließen von Farbstofflösungen entgegenwirken. Weiterhin verhindert es beim Rouleauxdruck die Tendenz der Druckfarben, dem Gesetz der Schwere folgend aus den Gravuren der rotierenden Druckwalze auszulaufen. Das Verdikkungsmittel bietet weiterhin die Möglichkeit, verschiedene Reaktionspartner in einer Druckfarbe unterzubringen, welche in dessen Abwesenheit vorzeitig, d.h. schon in der Druckfarbe und nicht erst auf der Faser, miteinander reagieren würden. Das Verdickungsmittel wirkt hierbei als "Distanzator" und verhindert die verfrühte Wechselwirkung reaktionsfreudiger Komponenten. So kann man beispielsweise in einer Druckfarbe eines kationischen Farbstoffs Tannin unterbringen, ohne daß die Bildung des Tanninlacks, welche erst beim Dämpfen auf der Faser erfolgen soll, eintritt. Werden in einer Druckpaste Pigmente wie Kaolin oder Zinkoxid untergebracht, so hat das Verdickungsmittel weiterhin die Aufgabe, solche Substanzen in homogener Dispersion zu halten und dafür zu sorgen, daß sich das Pigment nicht in den Gravuren der Walzen festsetzt, sondern homogen mit der Druckfarbe auf die Ware gelangt.

Die Auswahl eines Verdickungsmittels wird dementsprechend durch eine Vielzahl von Faktoren dirigiert. Sie wird u.a. durch die Art des Druckverfahrens, durch die Zusammensetzung der Druckfarbe, durch die Tiefe der Walzengravur und die geforderte Farbtiefe des Drucks durch die Warenqualität, insbesondere wenn die Forderung nach einem Durchdruck besteht, und auch durch die Art der Musterung, d.h. ob klein- oder großflächige Muster (Passer oder Decker) gedruckt werden sollen, bestimmt. Die erfindungsgemäßen Polyglykolester eignen sich insbesondere als Zusatz zu rein synthetischen Verdickungsmitteln, insbesondere solchen, die Carboxylgruppen enthalten. Als solche kommen in erster Linie Copolymere aus Maleinsäureanhydrid und einem Vinylalkyläther oder anderen copolymerisierbaren Monomeren in Betracht, die mit polybasischen Aminen, mehrwertigen Alkoholen oder Aminoalkoholen quervernetzt sein können, weiterhin Polymerisate der Acrylsäure, Maleinsäure oder deren Anhydriden, die mit Divinylbenzol oder ungesättigten Diestern, wie Dialkylmaleinester oder Äthylenglykoldimethacrylestern quer vernetzt sein können.

Weiterhin eigenen sich die erfindungsgemäßen Polyglykoläther als Zusätze zu Öl-in-Wasser- und Wasser- in-Öl-Emulsionen und deren Mischungen mit nativen Verdickungsmitteln. In allen diesen Systemen können die erfindungsgemäßen Polyglykolester nicht nur die Viskosität erhöhen bzw. stabilisieren, sondern erlauben auch die Wiederherstellung der Viskosität eines Systems, das beispielsweise durch Elektrolyteinfluß geschädigt wurde.

Es wurde weiterhin gefunden, daß man die Verbindungen der Formel I auch als Emulgatoren verwenden kann. Bevorzugt werden die Verbindungen der Formel I zur Herstellung von Farbstoffemulsionen verwendet, die zum Färben und Bedrukken von Textilien eingesetzt werden. Diese Emulsionen zeigen ein außergewöhnlich gutes Eindringungsvermögen in die Textilien, so daß gleichmäßige, tiefe Färbungen mit guten Echtheitseigenschaften resultieren.

Bei der Kolorierung von Textilien ist der arbeitsintensivste Schritt der Waschprozess, bei dem Verdickungsmittel, Farbstoff- und Hilfmittelreste aus dem Textilgut entfernt werden. Rationalisierungsbestrebungen setzen deshalb verständlicherweise beim Waschprozess ein. Es werden deshalb in Textildruckpasten Emulsionsverdickungen eingesetzt, da sich hierbei eine zusätzliche Entfernung der Verdickungsmittelreste erübrigt. Auch dort, wo anstelle von Vollemulsionen nur Halbemulsionen zur Anwendung kommen, ist der Rationalisierungseffekt noch beachtlich. Übliche Emulsionsverdickungen für den Textildruck werden aus Wasser, einem mit Wasser nicht mischbaren organischen Lösemittel oder Lösemittelgemisch und einem Emulgator hergestellt. Die bisher üblichen Emulsionsverdickungen weisen jedoch eine Reihe von Nachteilen auf: Aufgrund der relativ geringen Emulgierwirkung der herkömmlichen Emulgatoren waren ziemlich große Mengen dieser oberflächenaktiven Mittel erforderlich, die häufig beim Herstellen der Emulsionen zu starkem Schäumen führten. Übliche Entschäumer, wie sie in der Textilindustrie verwendet werden, können jedoch die Stabilität und Wirkstamkeit der Druckpasten verändern. Insbesondere besteht die Gefahr, daß durch den Zusatz entschäumender Komponenten eine Spaltung der Emulsion auftreten kann, d.h. die bereits fertigen Emulsionen wieder gebrochen werden. Dieser Effekt ist häufig nur eine Frage des Mengenverhältnisses, d.h. oberflächenaktive Mittel können bis zu einer bestimmten Einsatzmenge als Emulgatoren und darüber als Emulsionsspalter wirken. Die zugesetzten Entschäumer zeigen somit eine negative synergistische Wirkung. Ein weiterer damit zusammenhängender Nachteil ist die verschlechterte Reibechtheit von Pigmentdrucken.

Aufgrund der hohen Emulgierwirkung der Verbindungen der Formel I können erheblich geringere Mengen zur Herstellung einer stabilen Emulsion eingesetzt werden. Dazu kommt noch, daß die Verbindungen der Formel I an sich wenig Schaum erzeugen. Für die erfindungsgemäßen Emulsionen ist somit der Zusatz von Entschäumern entbehrlich. Bei der Herstellung von Emulsionsverdickungen entsprechend der vorliegenden Erfindung sind somit auch keine Vorkehrungen wie bei den üblichen schäumenden Emulgatoren, beispielsweise die Verwendung unverhältnismäßig großer Gefäße, erforderlich. Aufgrund der geringen Mengen an oberflächenaktiven Mitteln sind auch die Reibechtheiten der damit hergestellten Pigmentdrucke verbessert, weil der Kunststoff-Film weniger Fremdanteile in Form des schwerflüchtigen Emulgators enthält. Außerdem resultiert ein weicherer Griff der nach dem Pigmentdruckverfahren bedruckten Ware, weil die zur Kompensation der reibechtheitsschädlichen Emulgatoren notwendige, aber zu einem steifen Griff führende Bindermenge erheblich herabgesetzt werden kann.

Auch in den sogenannten Halbemulsionsverdickungen, bei denen die Druckpasten außer Wasser und den genannten Lösemitteln noch wasserquellbare Verdickungsmittel enthalten, zeigen die erfindungsgemäßen Emulgatoren im Vergleich zu den handelsüblichen Produkten wesentliche Vorteile: Die üblichen wasserquellbaren Verdickungsmittel, nämlich Alginate, Kernmehläther, Stärkeäther oder Carboxymethylcellulose enthalten mehr oder weniger erhebliche Mengen an Alkaliionen, die als Elektrolyte Emulsionen brechen können. Da Halbemulsionsverdickungen meistens für Druckpasten mit Reaktiv-, Dispersions- und Säurefarbstoffen verwendet werden und diese Farbstoffe entweder selbst Elektrolyte sind oder in ihren handelsüblichen Präparationen Elektrolyte enthalten, wurde dieses Problem bisher durch Einsatz von entsprechend großen Mengen an Emulgatoren zu lösen versucht. Diese hohen Emulgatormengen brachten nicht nur die bereits vorstehend geschilderten Nachteile mit sich, sondern führten häufig auch zu einer Herabsetzung der Brillanz der Drucke. Demgegenüber sind die erfindungsgemäßen Emulgatoren wesentlich weniger empfindlich gegen Elektrolyte als die bisher üblichen Produkte. Es genügen also auch im Falle von Halbemulsionen geringe Emulgatorenmengen.

Eine entsprechend der vorliegenden Erfindung erhaltene Emulsionsverdickung enthält, bezogen auf das Gewicht der fertigen Emulsionsverdickung, 0,1 bis 2, vorzugsweise 0,2 bis 1% Verbindungen der Formel I, 50 bis 70% der mit Wasser nicht mischbaren Lösemittel und 28 bis 49,9% Wasser. Als mit Wasser nicht mischbare Lösemittel kommen hauptsächlich Kohlenwasserstoffe wie Hexane, Heptane, Nonane, Cyclohexylbenzol, Toluol, Xylol, Tetrahydronaphthalin und Benzine oder Gemische solcher Lösemittel in Frage.

Die mit solchen Emulsionsverdickungen hergestellten Druckpasten enthalten weiterhin Farbmittel, insbesondere Pigmente, und Bindemittel. Gegebenenfalls können diese Druckpasten auch Säurespender wie Diammoniumhydrogenphosphat enthalten.

Die mit den erfindungsgemäßen Emulsionen bereiteten Druckpasten ergeben sehr egale und brillante Drucke mit sehr gutem Stand. Diese Druckpasten eignen sich insbesondere für den Pigmentdruck auf Baumwolle, Zellwolle und anderen natürlichen und auch synthetischen Fasern und deren Mischungen, insbesondere auf Mischungen von natürlichen und synthetischen Fasern. Die erfindungsgemäßen Emulsionsverdickungen eignen sich auch im Gemisch mit wasserquellbaren Verdickungsmitteln, wie Alginaten, Kernmehläthern, Stärkeäthern oder Carboxymethylcellulosen für Druckpasten mit Farbstoffen, beispielsweise Dispersionsfarbstoffen, Reaktivfarbstoffen und Säurefarbstoffen.

Die Herstellung der erfindungsgemäßen Emulsionen kann durch gemeinsames Verrühren der öligen und der wäßrigen Phase mit dem Emulgator oder nach anderen üblichen literaturbekannten Verfahren erfolgen (P. Becker, Emulsions: Theory and Practice, Reinhold Publishing Corp., New York, 1957, S. 209, Houben-Weyl, Bd. I 2, S. 97). Hierbei erweist es sich als vorteilhaft, daß die Verbindungen der Formel I wasserlöslich sind, so daß sie als wäßrige Lösungen zur Herstellung der Emulsionen eingesetzt werden können.

Ein besonderer Vorzug der Verbindungen der Formel I ist es, daß in der Regel bei der Herstellung der Emulsionen nur einfache Rührer eingesetzt werden müssen. Auch hierdurch werden gegenüber anderen Emulgatoren erhebliche Verfahrensvereinfachungen erzielt.

Die erfindungsgemäßen Emulsionen weisen eine hervorragende Stabilität auf. Sollte es dennoch bei längerer Lagerung unter ungünstigen Bedingungen zu Aufrahmungen kommen, so sind diese reversibel und im allgemeinen durch leichtes Rühren wieder in die ursprüngliche Emulsion überführbar.

Mit den erfindungsgemäßen Emulgatoren können die unterschiedlichsten Emulsionen hergestellt werden. Bevorzugt werden als ölige Phase neben den genannten organischen nicht wassermischbaren Lösemitteln Alterungsschutzmittel, Weichmacher und sonstige Hilfsmittel für den Kautschuksektor, biologische Wirkstoffe im Pflanzenschutzbereich, Hilfsmittel im Färberei-, Textil- und Lederverarbeitungssektor und in der Polymerisationstechnik, insbesondere für Emulsionspolymerisationen, eingesetzt.

Aus der DE—OS 1 595 369 sind Blockcopolymerisate des Ethylenoxids und Propylenoxids bekannt, die sich von Glycerin, Pentaaerythrit und Trimethylolpropan ableiten und — gegebenenfalls partiell — verestert sind. Diese Verbindungen eignen sich als Schaumverhüter.

Aus der DE—OS 1 619 053 sind wasserunlösliche Umsetzungsprodukte von Polyolen mit Ethylenoxid und Propylenoxid bekannt, die vollständig verestert sind. Diese Verbindungen ziehen substantiv auf die Polyesterfaser auf und verhindern das Austreten von Ester-Oligomeren aus dem Fasermaterial.

Aus der DE—OS 2 102 899 sind völlig veresterte Blockcopolymerisate des Ethylenoxids und Propylenoxids bekannt, die als Entschäumer wirken.

Aus der US—PS 2 457 139 sind — gegebenenfalls partiell — veresterte Polyglykole bekannt, die durch Polymerisation von Mischungen aus Ethylenoxid und Propylenoxid erhalten werden. Diese Verbindungen eignen sich als Emulgatoren und als Metallschmiermittel.

In den folgenden Beispielen beziehen sich Teile und Prozentangaben auf das Gewicht, sofern nichts anderes angegeben ist.

Beispiel 1

Es wird eine Druckpaste folgender Zusammensetzung

25 Gewichtsteile des Pigments C. I. 74160 in handelsüblicher Flüssigeinstellung
50 Gewichtsteile eines Binders auf Basis einer selbstreaktiven copolymeren Acrylat-Dispersion
50 Gewichtsteile eines Binders aus einer selbstvernetzenden Mischpolymerisatdispersion auf Butadienbasis
15 Gewichtsteile Hexakis-(methoxy-methyl)-melamin
20 Gewichtsteile eines Weichmachers auf Silikonbasis
35 Gewichtsteile eines hochpolymeren synthesichen Verdikkungsmittels auf Basis Acrylsäure-Maleinsäureanhydrid im Molverhältnis von 1 : 1 und vom Molgewicht von 2 000 000

795 Gewichtsteile Wasser

990 Gewichtsteile

hergestellt und in 3 gleiche Teile zu je 330 g aufgeteilt.

Zu Teil 1 werden 2 ml Wasser (Druckpaste A), zu Teil 2 werden 2 ml einer 33 prozentigen wäßrigen Lösung von Ammoniumsulfat (Druckpaste B) und zu Teil 3 werden 2 ml einer 33 prozentigen wäßrigen Lösung von Ammoniumsulfat und 2,5 g des nachstehend definierten erfindungsgemäßen Produktes (Druckpaste C) zugegeben und gut verrührt.

Rheologische Vergleichsmessungen der Viskosität dieser 3 Druckpasten mit einem Rotationsviskosimeter des Searle-Typs (Rheomat 30 der Firma Contraves, Meßsystem HS 25) bei einem Schergefälle D von 481 bis 34 000 $sec^{-1}$, einer Temperatur von 20°C und einem Drehmoment von 0 bis 200 cmp (0—1,96 cNm) zeigen die viskositätsstabilisierende Wirkung des erfindungsgemäßen Produktes Die Meßergebnisse in Form von Fließkurven sind dem Rheogramm zu entnehmen:

Die Punkt-Strich-Kurve wurde mit Druckpaste A, die durchgezogene Kurve mit Druckpaste B und die Strich-Strich-Kurve mit Druckpaste C erhalten.

Dem Rheogram ist zu entnehmen, daß die Viskosität der Druckpaste A mit der Strich-Punkt-Fließkurve durch die Zugabe eines Elektrolyts stark abnimmt (Druckpaste B mit der durchgezogenen Fließkurve).

Die Druckpaste C mit der Strich-Strich-Fließkurve zeigt die viskositätsverbessernde Wirkung des Erfindungsproduktes.

Herstellung des erfindungsgemäßen Produktes:

Pentaerythrit wird mit einem Gemisch aus Äthylenoxid und Propylenoxid im Molverhältnis 3 : 1 bis zu einem Molgewicht von 10 000 oxalkyliert. 1 Mol dieses Oxalkylats wird dann mit 2,9 Mol Ölsäure bei einem Temperatur von 160—165°C 15 Stunden in einer Stickstoffatmosphäre verestert.

Dieses Produkt wird in den folgenden Beispielen kurz als "Polyglykolester" bezeichnet. Diese Beispiele beschrieben die Verwendung des Polyglykolesters als Emulgator.

## Beispiel 2

In
790 Teile einer Öl-in-Wasser-Emulsion, die aus 75% Benzin mit einer Siedetemperatur zwischen 120 und 200°C, 0,4% Polyglykolester und
24,6% Wasser besteht, rührt man nacheinander ein:
150 Teile einer 40 prozentigen wäßrigen Dispersion eines Copolymerisates aus
55% n-Butylacrylat,
23% Acrylnitril,
17% Vinylchlorid und
5% N-Methylolmethacrylamid,

30 Teile einer 25 prozentigen wäßrigen Anteigung von C. I. Pigment Red 5, C. I. Nr. 12490 und
30 Teile Diammoniumphosphat, 30 prozentig, in Wasser.

Man erhält eine gut verarbeitbare, schaumarme Pigment-Druckpaste.

Ein Baumwollpopelingewebe wird mit dieser Druckpaste bedruckt, getrocknet und 7 Minuten bei 150°C fixiert. Man erhält brillante rote Drucke mit sehr guten Reibechtheiten.

## Beispiel 3

In eine Mischung aus
600 Teilen einer 4 prozentigen wäßrigen Lösung von Natriumalginat,
10 Teilen Natrium-m-nitrobenzolsulfonat,
2 Teilen Polyglykolester,
28 Teilen C. I. Reactive Yellow C. I. 18972,
10 Teilen Natriumhydrogencarbonat und
200 Teilen Wasser emulgiert man unter hochtourigem Rühren
150 Teile eines Benzins vom Siedepunkt 140 bis 200°C.

Mit dieser schaumarmen, gut verarbeitbaren Druckpaste wird ein Gewebe aus Zellwolle bedruckt, getrocknet, 5 Minuten im Sattdampf fixiert und gewaschen. Bereits nach einem kürzeren Spül- und Waschvorgang enthält das Gewebe keine Verdickungsmittelreste mehr. Nach dem Trocknen kommt die hohe Brillanz der gelben Drucke deutlicher zum Ausdruck.

## Beispiel 4

Ein Gewebe aus Polyäthylenglykolterephthalat wird mit einer Druckpaste, bestehend aus
40 Teilen einer 20 prozentigen wäßrigen Anteigung von C. I. Disperse Orange, C. I. 26080 und
960 Teilen einer Halbemulsion mit einem Gehalt an 350 Teilen Benzin,
648 Teilen einer 6 prozentigen wäßrigen Lösung eines Kernmehläthers und
2 Teilen Polyglykolester bedruckt, getrocknet, 1 Minute in Heißluft bei 200°C fixiert und nach einer reduktiven Behandlung gewaschen.

Man erhält brilliante orangefarbige Drucke mit sehr gutem Stand.

Beispiel 5

In eine Mischung aus
20 Teilen Wasser und
0,1 Teil Polyglykolester werden bei Raumtemperatur mit einem Turborührer
20 Teile Dibenzyläther eingerührt. Anschließend wird 5—10 Minuten bei Raumtemperatur nachgerührt. Die erhaltene Emulsion ist sehr stabil und zeigt über Monate keinerlei Trennerscheinungen.

Beispiel 6

In eine Mischung aus
20 Teilen Wasser und
0,2 Teilen Polyglykolester werden bei Raumtemperatur mit einem Turborührer
20 Teile Dibenzyläther eingerührt. Anschließend wird 5—10 Minuten bei Raumtemperatur nachgerührt. Die erhaltene Emulsion ist sehr stabil und zeigt über Monate keinerlei Trennerscheinungen.

Beispiel 7

Durch 5—10 Minuten langes Rühren mit einem Turborührer bei Raumtemperatur wird eine Emulsion hergestellt aus
20 Teilen Toluol,
20 Teilen Wasser und
0,1 Teil Polyglykolester. Die erhaltene Emulsion ist sehr stabil und zeigt über Wochen keinerlei Trennerscheinungen.

Beispiel 8

20 Teile eines handelsüblichen Spindelöls werden mit
20 Teilen Wasser und
0,6 Teilen Polyglykolester vermischt und 5—10 Minuten mit einem Turborührer bei Raumtemperatur gerührt. Man erhält eine sehr stabile Öl-in-Wasser-Emulsion.

Beispiel 9

20 Teile des Kautschukalterungsschutzmittels Vulkanox KSM® (Gemisch von aralkylierten Phenolen; Handelsprodukt der Firma Bayer (AG) werden mit
0,5 Teilen Polyglykolester und 20 Teilen Wasser zusammengegeben. Das Gemisch wird bei Raumtemperatur mit einem Turborührer 5—10 Minuten lang gerührt. Man erhält eine sehr stabile Emulsion, die über Monate keinerlei Trennerscheinigungen zeigt.

Beispiel 10

In einem Zweiliter-Dreihalskolben mit Rührer und Rückflußkühler werden
200 g Methacrylsäuremethylester,
400 g entmineralisiertes Wasser und
10 g Polyglykolester vorgelegt. Der Kolbeninhalt wird mit Stickstoff gespült und danach auf 95°C aufgeheizt und mit einer Lösung von
0,2 g Kaliumperoxidisulfat in
10 g entmineralisiertem Wasser aktiviert. Nach Anspringen der Reaktion wird eine halbe Stunde gerührt und danach werden innerhalb einer Stunde bei 95°C Innentemperatur folgende Lösungen gleichmäßig zudosiert:

1) Eine Lösung von 0,4 Kaliumperoxidisulfat in 100 g Wasser und
2) eine Lösung von 0,2 g Triäthanolamin in 80 g Wasser.

Man läßt nach beendetem Zulauf noch 2 Stunden bei 95°C nachrühren.

Es wird eine Polymeremulsion erhalten, die praktisch frei von grobem und feinem Koagulat ist. Der Umsatz der Monomeren beträgt 95%.

Beispiel 11

In einem Zweiliter-Drehalskolben mit Rührer und Rückflußkühler werden
200 g Styrol,
400 g entmineralisiertes Wasser,
8 g Polyglykolester und
2 g eines geradkettigen $C_{12}$—$C_{18}$-Alkylsulfonsäureäthanolamidgemisches vorgelegt. Der Kolbeninhalt wird mit Stickstoff gespült und danach auf 95°C aufgeheizt und mit einer Lösung von 0,2 g Kaliumperoxodisulfat in 10 g entmineralisiertem Wasser aktiviert. Nach Anspringen der Reaktion wird eine halbe Stunde gerührt und danach werden innerhalb einer Stunde bei 95°C Innentemperatur folgende Lösungen gleichmäßig zudosiert:

1) Eine Lösung von 0,4 g Kaliumperoxodisulfat in 100 g Wasser und
2) eine Lösung von 0,2 g Triäthanolamin in 80 g Wasser.

Man läßt nach beendetem Zulauf noch 2 Stunden bei 95°C nachrühren.

Es wird eine Polymeremulsion erhalten, die frei von groben oder feinen Ausscheidungen ist, der Monomerenumsatz beträgt 100%.

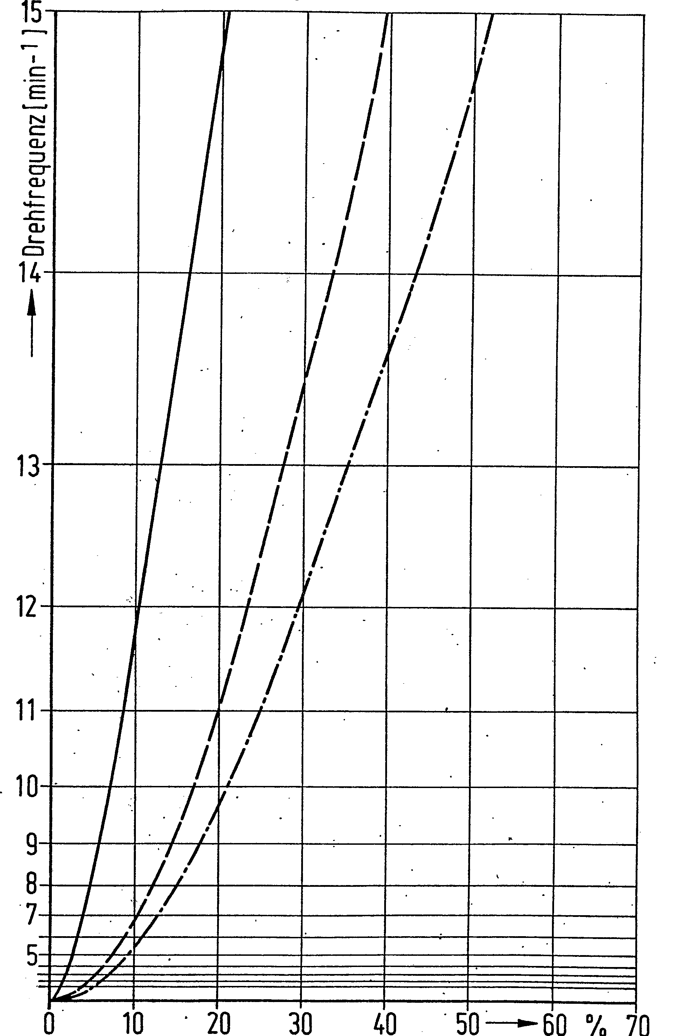

## Patentansprüche

1. Verbindungen der Formel

$$(CH_3)_a - C \left[ CH_2 - (O - CHZ - CH_2)_n - \begin{matrix} (OH)_b \\ (O-CO-R)_{4-a-b} \end{matrix} \right]_{4-a}$$

in welcher R ein offenkettiger aliphatischer Rest mit 9 bis 19 C-Atomen ist; Z für Wasserstoff und Methyl steht, wobei das Verhältnis H : $CH_3$ 2 : 1 bis 4 : 1 beträgt;
a Null oder 1 ist,
b 1 bis 1,5 ist, und
(4-a) n 150 bis 300 beträgt.

2. Verbindungen nach Anspruch 1, dadurch gekennzeichnet, daß R—CO— den Acylrest einer Fettsäure mit 11 bis 17 C-Atomen im Rest R darstellt.

3. Verbindungen nach Anspruch 1 und 2, dadurch gekennzeichnet, daß das Verhältnis von H : $CH_3$ im Rest Z 2,5 : 1 bis 3,5 : 1 beträgt.

4. Verbindungen nach Anspruch 1 bis 3, dadurch gekennzeichnet, daß (4-a) n 200 bis 250 ist.

5. Verbindungen nach Anspruch 1, dadurch gekennzeichnet, daß RCO Oleyl ist; das Verhältnis von H : $CH_3$ im Rest Z 3 : 1 in statistischer Verteilung ist, a Null ist, n (4-a) etwa 210 ist und b 1,1 ist.

6. Verfahren zur Herstellung der Verbindungen nach Anspruch 1, dadurch gekennzeichnet, daß man eine Verbindung der Formel

$$(CH_3)_a—C(CH_2OH)_{4-a}$$

in der a Null oder 1 ist, mit einem Gemisch aus Äthylenoxid und Propylenoxid im Molverhältnis 2 : 1 bis 4 : 1 oxalkyliert und das Oxalkylat mit einem den Rest R—CO-einführenden Acylierungsmittel partiell verestert.

7. Verwendung der Verbindungen nach Anspruch 1 als oberflächenaktive Mittel.

8. Verwendung der Verbindungen nach Anspruch 7 zur Erhöhung bzw. Stabilisierung der Viskosität wäßriger Systeme.

9. Verwendung der Verbindungen nach Anspruch 7 als Emulgatoren.

10. Verwendung der Verbindungen nach Anspruch 7 als Zusatz zu Druckpasten oder Klotzflotten.

## Claims

1. Compounds of the formula

$$(CH_3)_a - C \left[ CH_2 - (O-CHZ-CH_2)_n - \begin{matrix} (OH)_b \\ (O-CO-R)_{4-a-b} \end{matrix} \right]_{4-a}$$

in which R is an open-chain aliphatic radical having from 9 to 19 carbon atoms; Z stands for hydrogen and methyl, the ratio of H:$CH_3$ being from 2:1 to 4:1
*a* is zero or 1,
*b* is 1 to 1.5, and
(4-a) n is 150 to 300.

2. Compounds according to claim 1, characterized in that R—CO— represents the acyl radical of a fatty acid having from 11 to 17 carbon atoms in the radical R.

3. Compounds according to claims 1 and 2, characterized in that the ratio of $H:CH_3$ in the radical Z is from 2.5:1 to 3.5:1.

4. Compounds according to claims 1 to 3, characterized in that (4-a) n is from 200 to 250.

5. Compounds according to claim 1, characterized in that RCO is oleyl; the ratio of $H:CH_3$ in the radical Z is 3:1 in random distribution, *a* is zero, (4-a) n is about 210, and *b* is 1.1.

6. Process for the preparation of the compounds according to claim 1, characterized in that a compound of the formula

$$(CH_3)_a - C(CH_2OH)_{4-a}$$

in which *a* is zero or 1, is oxalkylated with a mixture from ethylene oxide and propylene oxide in a molar ratio of from 2:1 to 4:1 and partially esterifying the oxalkylation product with an acylating agent introducing the radical R—CO—.

7. Use of the compounds according to claim 1 as surface active agents.

8. Use of the compounds according to claim 7 for enhancing respectively stabilizing the viscosity of aqueous systems.

9. Use of the compounds according to claim 7 as emulsifiers.

10. Use of the compounds according to claim 7 as additives to printing pastes or padding liquors.

**Revendications**

1. Les composés de formule

$$(CH_3)_a - C\left[CH_2 - (O{-}CHZ{-}CH_2)_n - \left\{\begin{matrix}(OH)_b\\(O{-}CO{-}R)_{4-a-b}\end{matrix}\right.\right]_{4-a}$$

dans laquelle R est un radical aliphatique à chaîne ouverte en $C_9$ à $C_{19}$; Z représente l'hydrogène et un méthyle, le rapport $H : CH_3$ étant compris entre 2 et 4;
a = 0 ou 1,
b est un nombre de 1 à 1,5, et
le produit (4-a) n est compris entre 150 et 300.

2. Composés selon la revendication 1, dans lesquels le radical R—CO— est le radical acyle d'un acide gras en $C_{11}$ à $C_{17}$ dans le reste R.

3. Composés selon la revendication 1 ou 2, dans lesquels le rapport $H : CH_3$ (radical Z) est compris entre 2,5 et 3,5.

4. Composés selon l'une quelconque des revendications 1 à 3, dans lesquels le produit (4-a) n est compris entre 200 et 250.

5. Composés selon la revendication 1, dans lesquels le radical R—CO— est le radical oléyle; le rapport $H : CH_3$ (radical Z) est égal à 3 (en répartition statistique), a = 0, le produit n (4-a) est d'environ 210 et b = 1,1.

6. Procédé de préparation des composés selon la revendication 1, caractérisé en ce que l'on soumet à une oxalkylation un composé de formule

$$(CH_3)_a - C(CH_2OH)_{4-a}$$

dans laquelle a = 0 ou 1, avec un mélange d'oxyde d'éthylène et d'oxyde de propylène dans un rapport molaire compris entre 2 et 4, puis on estérifie partiellement le produit de l'oxalkylation formé avec un agent acylant qui fixe le radical R—CO—.

7. Utilisation des composés selon la revendication 1, comme agents surfactifs (agents tensioactifs).

8. Utilisation selon la revendication 7, pour élever et stabiliser la viscosité de systèmes et milieux aqueux.

9. Utilisation selon la revendication 7, les composés étant employés comme émulsionnants.

10. Utilisation selon la revendication 7, les composés étant come additifs à des pâtes d'impression ou à des bains de foulardage.

0 000 137